(19) **Europäisches Patentamt**
**European Patent Office**
**Office européen des brevets**

(11) **EP 3 004 803 B1**

(12) **EUROPEAN PATENT SPECIFICATION**

(45) Date of publication and mention
of the grant of the patent:
**05.05.2021 Bulletin 2021/18**

(21) Application number: **13886467.3**

(22) Date of filing: **07.06.2013**

(51) Int Cl.:
*G01C 21/36* (2006.01)     *G06F 21/74* (2013.01)
*G06K 9/00* (2006.01)     *H04W 4/02* (2018.01)
*H04W 4/18* (2009.01)     *H04W 4/029* (2018.01)
*G06T 11/00* (2006.01)

(86) International application number:
**PCT/CN2013/076912**

(87) International publication number:
**WO 2014/194513 (11.12.2014 Gazette 2014/50)**

(54) **A METHOD AND APPARATUS FOR SELF-ADAPTIVELY VISUALIZING LOCATION BASED DIGITAL INFORMATION**

VERFAHREN UND VORRICHTUNG ZUR SELBSTADAPTIVEN VISUALISIERUNG STANDORTBASIERTER DIGITALER INFORMATION

PROCÉDÉ ET APPAREIL DE VISUALISATION AUTO-ADAPTATIVE D'INFORMATIONS NUMÉRIQUES BASÉES SUR LA LOCALISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.04.2016 Bulletin 2016/15**

(60) Divisional application:
**20198968.8**

(73) Proprietor: **Nokia Technologies Oy**
**02610 Espoo (FI)**

(72) Inventors:
• **TIAN, Ye**
**Beijing 100876 (CN)**

• **WANG, Wendong**
**Beijing 100876 (CN)**
• **GONG, Xiangyang**
**Beijing 100101 (CN)**
• **FU, Yao**
**Heilongjiang 153000 (CN)**

(74) Representative: **Laine IP Oy**
**Porkkalankatu 24**
**00180 Helsinki (FI)**

(56) References cited:
**CN-A- 102 519 475     CN-A- 103 090 862**
**CN-A- 103 105 174     US-A1- 2011 098 061**
**US-A1- 2011 141 141     US-A1- 2011 221 771**
**US-A1- 2011 283 223**

EP 3 004 803 B1

**Description**

FIELD OF THE INVENTION

The present invention generally relates to Location Based Service (LBS). More specifically, the invention relates to a method and apparatus for self-adaptively visualizing location based digital information on a device.

BACKGROUND

The modern communications era has brought about a tremendous expansion of communication networks. Communication service providers and device manufacturers are continually challenged to deliver value and convenience to consumers by, for example, providing compelling network services, applications, and contents. The developments of communication technologies have contributed to an insatiable desire for new functionality. Nowadays, mobile phones have evolved from merely being communication tools to a kind of device with full-fledged computing, sensing, and communication abilities. By making full use of these technological advantages, Augmented Reality (AR) is emerging as a killer application on smart phones due to its good interaction effect. In most AR based applications, digital information of ambient objects, such as information about Points of Interest (POIs), could be overlaid on a live view which may be captured by a smart phone's built-in camera. Some applications also provide functions of searching POIs through a user's current position and orientation which may be collected with embedded sensors. A digital map is also extensively used in LBS applications, especially on smart phones. Some advanced location based applications provide map based and live-view based browsing modes. However, the map mode and the live-view mode could not be used simultaneously, let alone complements to each other. But in fact, users often need to switch between the two modes, especially when they need navigation in strange places. Moreover, three-dimension (3D) effects are getting more and more popular in mobile LBS applications. In these circumstances, it is rather difficult to distribute digital tags rationally. For example, excessive digital tags on the same direction are often overlapped on a map or a live view, or the layout of digital tags on a map or a live view is not in accordance with the physical truth when the specified searching area changes, which leads to a lost of information about the relative positions and orientations of the digital tags. Thus, it is desirable to design a dynamic and adjustable mechanism for organizing and visualizing location based digital information, for example on mobile devices with AR.

US 2011/283223 A1 discloses rendering of a user interface for a location-based service that simultaneously includes both a main view portion and a preview portion. One of the main view portion and the preview portion is caused, at least in part, to display a perspective view of one or more objects in a field of view, and the other of the main view portion and the preview portion is caused, at least in part, to display a plan view of at least a portion of the one or more objects in the field of view. The field of vision can be adjusted by the user by adjusting the orientation of the user device.

US 2011/221771 A1 discloses merging smart markers in augmented reality. A merged group of smart markers includes smart markers from a plurality of smart markers with a first common attribute. Smart markers in the merged group are displayable within the augmented reality. Additionally smart markers may be displayed in a map view.

SUMMARY

The present description introduces a solution of self-adaptively visualizing location based digital information. With this solution, the location based digital information could be displayed in different modes such as a live-view mode and a map-view mode, and the live-view mode and the map-view mode may be highly linked.

According to an aspect there is provided the subject-matter of the independent claims.

According to a first aspect of the present invention, there is provided a method comprising: obtaining context information for a LBS, in response to a request for the LBS from a user; and presenting, based at least in part on the context information, the LBS through a user interface in at least one of a first mode and a second mode for the LBS, wherein a control of the LBS in one of the first mode and the second mode causes, at least in part, an adaptive control of the LBS in other of the first mode and the second mode.

According to a second aspect of the present invention, there is provided an apparatus comprising: at least one processor; and at least one memory comprising computer program code, the at least one memory and the computer program code configured to, with the at least one processor, cause the apparatus to perform at least the following: obtaining context information for a LBS, in response to a request for the LBS from a user; and presenting, based at least in part on the context information, the LBS through a user interface in at least one of a first mode and a second mode for the LBS, wherein a control of the LBS in one of the first mode and the second mode causes, at least in part, an adaptive control of the LBS in other of the first mode and the second mode.

According to a third aspect of the present invention, there is provided a computer program product comprising a computer-readable medium bearing computer program code embodied therein for use with a computer, the computer program code comprising: code for obtaining context information for a LBS, in response to a request for the LBS from a user; and code for presenting, based at least in part on the context information, the LBS through a user interface in at least one of a first mode and a second mode for the LBS, wherein a control of the LBS in one of the first mode and the second mode causes, at least in part, an adaptive control of the LBS in other of the first mode and the second mode.

According to a fourth aspect of the present invention, there is provided an apparatus comprising: obtaining means for obtaining context information for a LBS, in response to a request for the LBS from a user; and presenting means for presenting, based at least in part on the context information, the LBS through a user interface in at least one of a first mode and a second mode for the LBS, wherein a control of the LBS in one of the first mode and the second mode causes, at least in part, an adaptive control of the LBS in other of the first mode and the second mode.

According to a fifth aspect of the present invention, there is provided a method comprising: facilitating access to at least one interface configured to allow access to at least one service, the at least one service configured to at least perform the method in the first aspect of the present invention.

According to exemplary embodiments, obtaining the context information for the LBS may comprise: acquiring sensing data from one or more sensors, input data from the user, or a combination thereof; and extracting the context information by analyzing the acquired data. For example, the context information may comprise: one or more imaging parameters, one or more indications for the LBS from the user, or a combination thereof. In an exemplary embodiment, the control of the LBS may comprise updating the context information.

In accordance with exemplary embodiments, presenting the LBS may comprise: determining location based digital information based at least in part on the context information; and visualizing the location based digital information through the user interface in the at least one of the first mode and the second mode. The location based digital information may indicate one or more POIs of the user by respective tags, and wherein the one or more POIs are within a searching scope specified by the user.

According to exemplary embodiments, the first mode may comprise a live mode (or a live-view mode) and the second mode may comprise a map mode (or a map-view mode), and visualizing the location based digital information may comprise at least one of: displaying the tags on a live view presented in the first mode according to corresponding imaging positions of the one or more POIs, based at least in part on actual distances between the one or more POIs and an imaging device for the live view; and displaying the tags on a map view presented in the second mode according to corresponding geographic positions of the one or more POIs. For example, an area determined based at least in part on the searching scope may be also displayed on the map view, and wherein the tags displayed on the map view are within the area. In an example embodiment, the searching scope may comprise a three-dimensional structure composed of a rectangular pyramid part and a spherical segment part, and the area is a projection of the three-dimensional structure on a horizontal plane.

In accordance with exemplary embodiments, the tags on the live view may have respective sizes and opaque densities based at least in part on the actual distances between the one or more POIs and the imaging device. In an exemplary embodiment, the tags on the live view may be displayed in batches, by ranking the tags based at least in part on the actual distances between the one or more POIs and the imaging device. The batches of the tags can be switched in response to an indication from the user. According to an exemplary embodiment, corresponding information frames may be displayed on the live view for describing the tags.

In exemplary embodiments of the present invention, the provided methods, apparatuses, and computer program products can enable location based digital information to be displayed in different modes (such as a live-view mode and a map-view mode) simultaneously, alternately or as required. Any variation of context information (such as camera attitude, focal length, current position, searching radius and/or other suitable contextual data) could lead to corresponding changes of visualizations in both modes. Moreover, a friendly human-machine interface is provided to visualize such digital information, which could effectively avoid a problem of digital tags accumulation in the live mode and/or the map mode.

## BRIEF DESCRIPTION OF THE DRAWINGS

The invention itself, the preferable mode of use and further objectives are best understood by reference to the following detailed description of the embodiments when read in conjunction with the accompanying drawings, in which:

Fig.1 is a flowchart illustrating a method for self-adaptively visualizing location based digital information, in accordance with embodiments of the present invention;

Fig.2 exemplarily illustrates a reference coordinate system in accordance with an embodiment of the present invention;

Fig.3 exemplarily illustrates a body coordinate system for a device in accordance with an embodiment of the present invention;

Fig.4 exemplarily illustrates an attitude of a camera in accordance with an embodiment of the present invention;

Fig.5 exemplarily illustrates a view angle of a camera in accordance with an embodiment of the present invention;

Fig.6 exemplarily illustrates a searching scope for POIs in accordance with an embodiment of the present invention;

Figs.7(a)-(b) show exemplary user interfaces for illustrating a change of a searching scope in accordance with an embodiment of the present invention;

Fig.8 is a flowchart illustrating a process of a two-way control in accordance with an embodiment of the present invention;

Fig.9 exemplarily illustrates a system architecture in accordance with an embodiment of the present invention;

Figs.10(a)-(b) show exemplary user interfaces for illustrating a display of tags in accordance with an embodiment of the present invention;

Fig.11 exemplarily illustrates the three-dimensional perspective effect in accordance with an embodiment of the present invention;

Fig.12 exemplarily illustrates an effect of rotating a device up and down in accordance with an embodiment of the present invention;

Fig.13 is a flowchart illustrating a process of distributing POI's information in a perspective and hierarchical way to avoid an accumulation of tags, in accordance with an embodiment of the present invention; and

Fig.14 is a simplified block diagram of various apparatuses which are suitable for use in practicing exemplary embodiments of the present invention.

DETAILED DESCRIPTION OF THE INVENTION

The embodiments of the present invention are described in detail with reference to the accompanying drawings. Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Furthermore, the described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention.

There may be many approaches applicable for LBS applications or location based AR systems. For example, geospatial tags can be presented in a location-based system; AR data can be overlaid onto an actual image; users may be allowed to get more information about a location through an AR application; an auxiliary function may be provided for a destination navigation by AR maps; and so on. However, existing LBS applications on mobile devices usually separate a map-view mode and a live-view mode, while people have to switch over between the two modes frequently when they have requirements of information retrieval and path navigation at the same time. It is necessary to put forward a novel solution which could integrate both of the map-view mode and the live-view mode. More specifically, the two modes are expected to be highly linked by realizing an interrelated control. On the other hand, digital tags which represent POIs are often cramped together if they are located in the same direction and orientation. This kind of layout may make people feel awkward to select and get detail information of a certain tag. Moreover, existing AR applications do not take the depth of field into account when placing digital tags, such that the visual effect of digital tags are not in accordance with a live view.

According to exemplary embodiments, an optimized solution is proposed herein to solve at least one of the problems mentioned above. In particular, a novel human-computer interaction approach for LBS applications is provided, with which a live-view interface and a map-view interface may be integrated as a unified interface. A two-way control mode (or a master-slave mode) is designed to realize the interoperability between the live-view interface and the map-view interface, and thus variations of the map view and the live view can be synchronized. A self-adaptive and context-aware approach for digital tags visualization is also proposed, which enables an enhanced 3D perspective display.

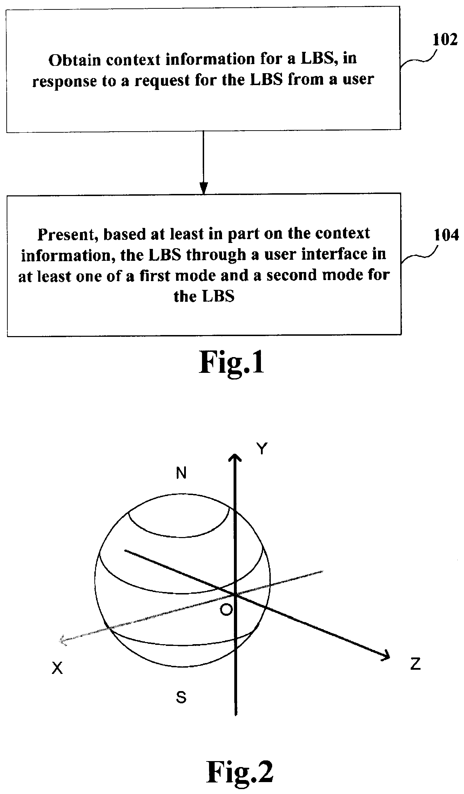

Fig.1 is a flowchart illustrating a method for self-adaptively visualizing location based digital information, in accordance with embodiments of the present invention. It is contemplated that the method described herein may be used with any apparatus which is connected or not connected to a communication network. The apparatus may be any type of user equipment, mobile device, or portable terminal comprising a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, comprising the accessories and peripherals of these devices, or any combination thereof. Additionally or alternatively, it is also contemplated that the method described herein may be used with any apparatus providing or supporting LBS through a communication network, such as a network node operated by services providers or network operators. The network node may be any type of network device comprising server, service platform, Base Station (BS), Access Point (AP), control center, or any combination thereof. In an exemplary embodiment, the method may be implemented by processes executing on various apparatuses which communicate using an interactive model (such as a client-server model) of network communications. For example, the proposed solution may be performed at a user device, a network node, or both of them through communication interactions for LBS.

According to exemplary embodiments, the method illustrated with respect to Fig.1 enables a live view (such as an AR-based view) and a map view to be integrated in a "two-way control" mode for LBS applications. For example, a user may request a LBS through his/her device (such as a user equipment with a built-in camera), when the user needs navigation in a strange place or wants to find some POIs such as restaurants, malls, theaters, bus stops or the like. Such request may initiate the corresponding LBS application which may for example support a live view in a 3D mode and/or a map view in a 2D mode. Before elaborating the detailed implementation, it is necessary to first introduce some definitions which would be utilized later.

Fig.2 exemplarily illustrates a reference coordinate system in accordance with an embodiment of the present invention. The reference coordinate system is an inertial coordinates system, and it is constructed for determining an attitude of a camera (such as a camera embedded or built in a device) with absolute coordinates. As shown in Fig.2, X-axis in the reference coordinate system is defined as the vector product of Y-axis and Z-axis, which is substantially tangential to the ground at a current location of the device and roughly points to the West. Y-axis in the reference coordinate system is substantially tangential to the ground at the current location of the device and roughly points towards the magnetic North Pole (denoted as "N" in Fig.2). Accordingly, Z-axis in the reference coordinate system points towards the sky and is substantially perpendicular to the ground.

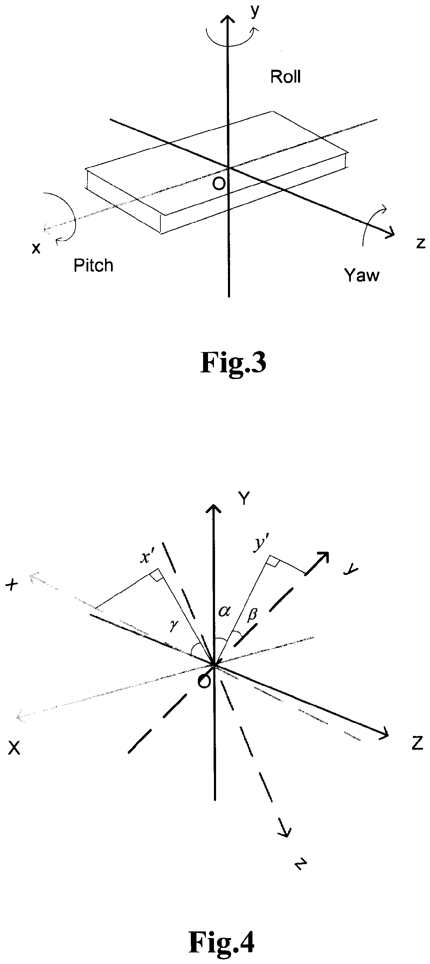

Fig.3 exemplarily illustrates a body coordinate system for a device in accordance with an embodiment of the present invention. In general, the body coordinate system is a triaxial orthogonal coordinate system fixed on the device. As shown in Fig.3, the origin of coordinates is the device's center of gravity, which may be assumed approximately located at the point of a camera embedded or built in the device. The x-axis in the body coordinate system is located in the reference plane of the device and parallel to the device's major axis. The y-axis in the body coordinate system is perpendicular to the reference plane of the device and directly points to the right front of the device's reference plane. Actually, the y-axis is parallel to the camera's principal optic axis. The z-axis in the body coordinate system is located in the reference plane of the device and parallel to the device's minor axis.

Fig.4 exemplarily illustrates an attitude of a camera in accordance with an embodiment of the present invention. The attitude of the camera is exploited to describe an orientation of a rigid body (here it refers to a device such as user equipment, mobile phone, portable terminal or the like in which the camera is embedded or built). To describe such attitude (or orientation) in a three-dimensional space, some parameters such as orientation angle, pitch angle and rotation angle may be required, as shown in Fig.4. The orientation angle is an index which measures an angle between the rigid body and the magnetic north. With a reference to Fig.4 in combination with Figs.2-3, the orientation angle represents a rotation around the z-axis in the body coordinate system, and measures an angle between the Y-axis in the reference coordinate system and a projection (denoted as y' in Fig.4) of the y-axis in the body coordinate system on the XOY plane, as the angle of $\alpha$ shown in Fig.4. The pitch angle is an index which describes an angle between the rigid body and the horizontal plane (such as the XOY plane in the reference coordinate system). With a reference to Fig.4 in combination with Figs.2-3, the pitch angle represents a rotation around the x-axis in the body coordinate system, and measures an angle between the y-axis in the body coordinate system and the XOY plane in the reference coordinate system, as the angle of $\beta$ shown in Fig.4. The rotation angle is an index which describes an angle between the rigid body and the vertical plane (such as the YOZ plane in the reference coordinate system). With a reference to Fig.4 in combination with Figs.2-3, the rotation angle represents a rotation around the y-axis in the body coordinate system, and measures an angle between the x-axis in the body coordinate system and the YOZ plane in the reference coordinate system, as the angle of $\gamma$ shown in Fig.4. In Fig.4, line *x'* represents a projection of the x-axis in the body coordinate system on the YOZ plane, and line y' represents a projection of the y-axis in the body coordinate system on the XOY plane.

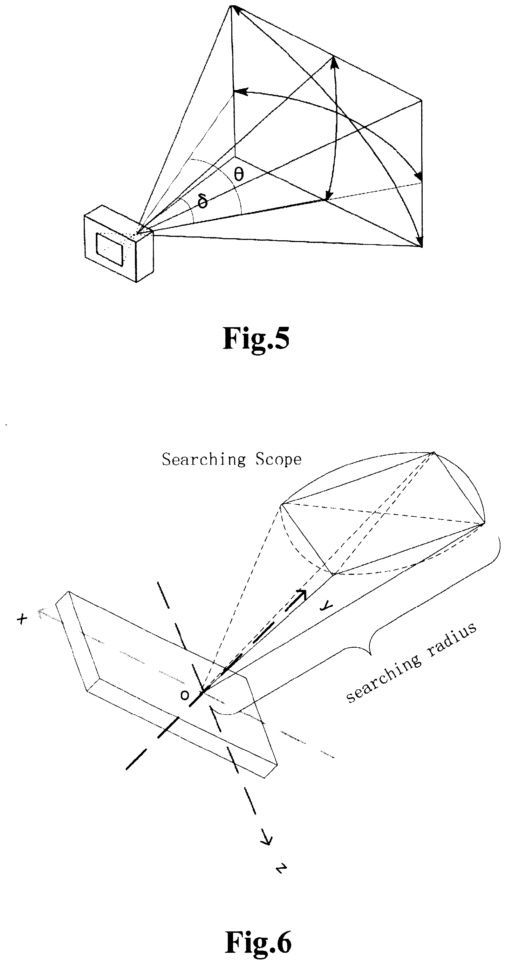

Fig.5 exemplarily illustrates a view angle of a camera in accordance with an embodiment of the present invention. The view angle of the camera describes the angular extent of a given scene which is imaged by the camera. It may comprise a horizontal view angle $\theta$ and a vertical view angle $\delta$, as shown in Fig.5. For example, the horizontal view angle $\theta$ can be calculated from a chosen dimension *h* and an effective focal length *f* as follows:

$$\theta = 2\arctan\frac{h}{2f} \qquad (1)$$

where *h* denotes the size of the Complementary Metaloxide Oxide Semi-conductor (CMOS) or Charged Coupled Device (CCD) in a horizontal direction. While the vertical view angle $\delta$ can be calculated from a chosen dimension $v$ and the effective focal length *f* as follows:

$$\delta = 2\arctan\frac{v}{2f} \qquad (2)$$

where v denotes the size of the CMOS or CCD in a vertical direction.

Referring back to Fig.1, in response to a request for a LBS from a user, context information for the LBS can be obtained in block 102. For example, the context information may comprise one or more imaging parameters (such as a current position, a view angle, an attitude of a camera, a zoom level, and/or the like), one or more indications for the LBS from the user (such as an indication of a searching radius for POIs, a control command for displaying tags, an adjustment of one or more imaging parameters, and/or the like), or a combination thereof. In an exemplary embodiment, the context information for the LBS can be obtained by acquiring sensing data from one or more sensors, input data from the user, or a combination thereof, and extracting the context information by analyzing the acquired data. For example, the sensing data (such as geographic coordinates of the camera, raw data about the attitude of the camera, the focal length of the camera, and/or the like) may be acquired in real time or at regular time intervals from one or more embedded sensors (such as a Global Positioning System (GPS) receiver, an accelerometer, a compass, a camera and/or the like) of the user's device in which the camera is built. According to an exemplary embodiment, the camera's imaging parameters can be determined from data sensed through different sensors, for example, by detecting the camera's current position from height, longitude and latitude coordinates acquired from the GPS receiver, detecting the camera's orientation angle from the raw data acquired from the compass, detecting the camera's pitch angle and rotation angle from the raw data collected from the accelerometer, and detecting the camera's view angle through the focal length of the camera. On the other hand, the input data (such as an adjustment of one or more imaging parameters, a radius of a searching scope specified for POIs, a switch command for displaying tags, and/or the like) from the user may be acquired through a user interface (for example, via a touch screen or functional keys) of the device.

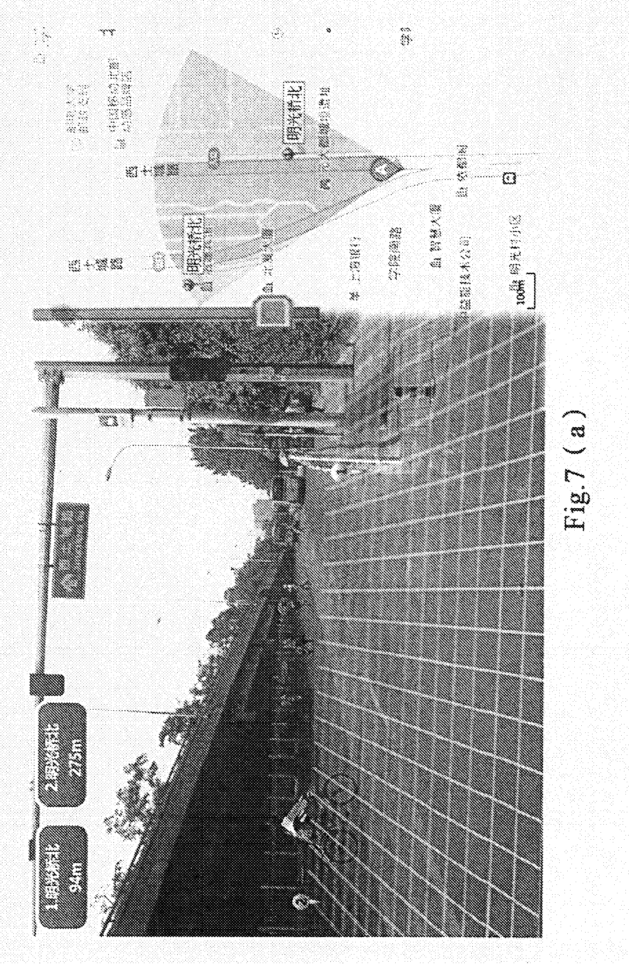

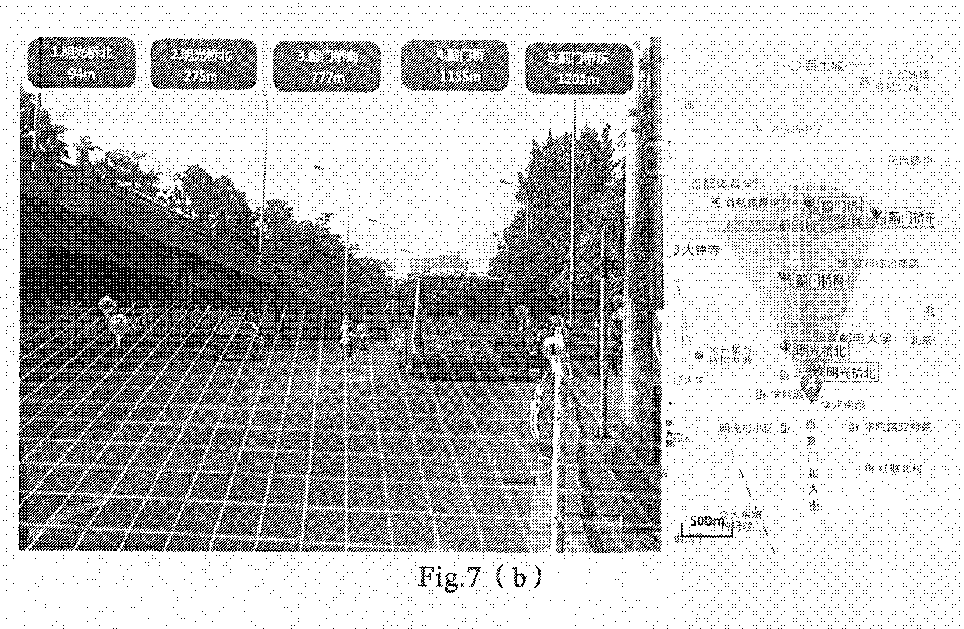

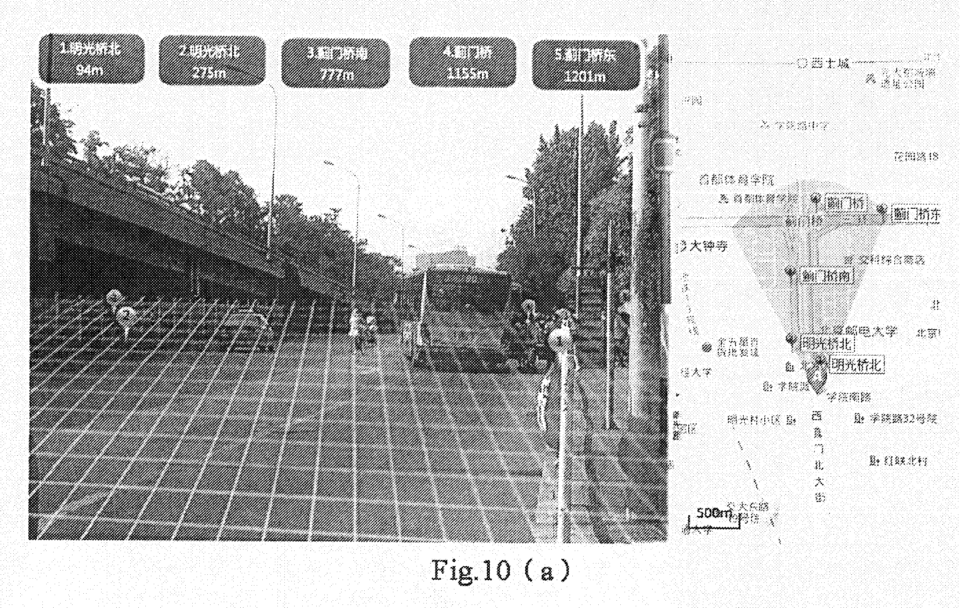

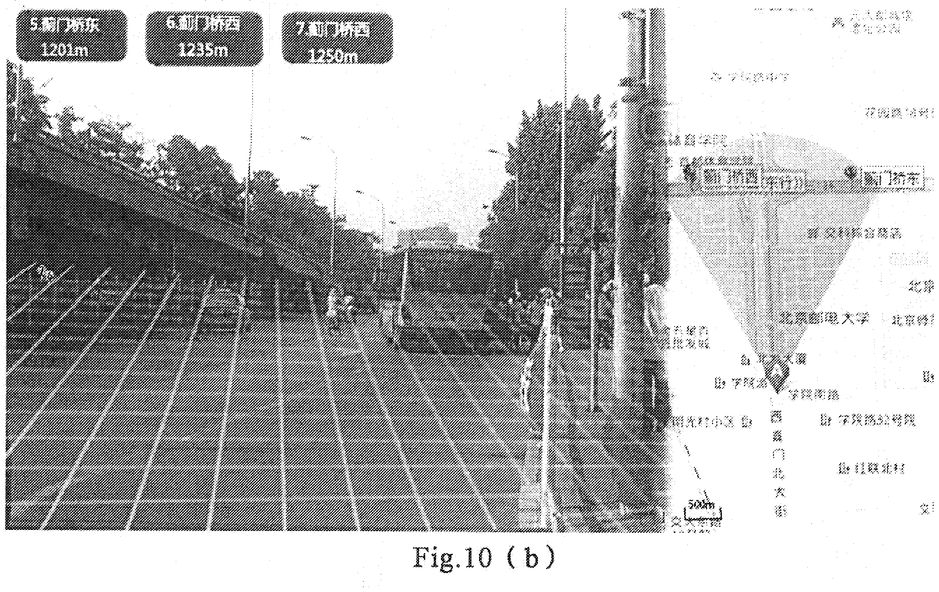

In block 104 of Fig.1, the LBS can be presented through a user interface in at least one of a first mode and a second mode for the LBS, based at least in part on the context information. Particularly, a control of the LBS in one of the first mode and the second mode may cause, at least in part, an adaptive control of the LBS in other of the first mode and the second mode. In an exemplary embodiment, the control of the LBS may comprise updating the context information. For example, the user may update the context information by adjusting a current position of the camera, a view angle of the camera, an attitude of the camera, a searching radius, displaying batch for tags, a zoom level of a view, and/or other contextual data. According to exemplary embodiments, the LBS may be presented by determining location based digital information based at least in part on the context information and visualizing the location based digital information through the user interface in the at least one of the first mode and the second mode. The first mode may comprise a live mode (or a live-view mode), and the second mode may comprise a map mode (or a map-view mode). For example, the location based digital information may indicate one or more POIs of the user by respective tags (such as the numerical icons shown in Figs.7(a)-(b) and Figs.10(a)-(b)), and the one or more POIs are within a searching scope specified by the user. In this case, the location based digital information may be visualized by at least one of the following: displaying the tags on a live view presented in the first mode according to corresponding imaging positions of the one or more POIs, based at least in part on actual distances between the one or more POIs and an imaging device (such as the camera) for the live view; and displaying the tags on a map view presented in the second mode according to corresponding geographic positions of the one or more POIs. In an exemplary embodiment, a specified area (such as a pie-shape area shown in Fig.7(a), Fig.7(b), Fig.10(a) or Fig.10(b)) determined based at least in part on the searching scope may be also displayed on the map view, and the tags displayed on the map view are within this specified area, which are illustrated in Figs.7(a)-(b) and Figs.10(a)-(b).

Fig.6 exemplarily illustrates a searching scope for POIs in accordance with an embodiment of the present invention. As shown in Fig.6, the searching scope specified for POIs of the user may comprise a three-dimensional structure composed of two parts: a rectangular pyramid part and a spherical segment part. Accordingly, the area displayed on the map view as mentioned above may be a projection of the three-dimensional structure on a horizontal plane (such as the XOY plane in the reference coordinate system). In Fig.6, the origin of the body coordinate system can be determined by the camera's current geographic position (longitude, latitude and height). The camera's attitude (orientation angle, pitch angle and rotation angle) determines a deviation angle of the searching scope in the reference coordinate system. The camera's view angle determines an opening angle of the rectangular pyramid part. The length of the searching radius determines the length of the edge of the rectangular pyramid part, as shown in Fig.6. It will be appreciated that the three-dimensional structure shown in Fig.6 is merely as an example, and the searching scope for the POIs may have other structures corresponding to any suitable imaging device.

The one or more POIs to be visualized on user interfaces may be obtained by finding out those POIs which fall into the searching scope. A database storing information (such as positions, details and so on) about POIs may be located internal or external to the user device. The following two steps may be involved in an exemplary embodiment. First, the POIs from which the spherical distance to the camera's current location is less than the searching radius are queried from the database and then added to a candidate collection $S_1$. Optionally, the corresponding description information of the POIs in candidate collection $S_1$ may be queried also from the database and recorded for the LBS. Second, the POIs in collection $S_1$ are filtered based at least in part on corresponding geographic coordinates of the camera and the POIs. For example, some POIs in collection $S_1$ may be filtered away if an angle between the y-axis in the body coordinate system and a vector which points from the origin of the reference coordinate system to these POI's coordinates exceeds one half of the view angle (the horizon view angle and/or the vertical view angle shown in Fig.5) of the camera. Then the remaining POIs in collection $S_1$ form a new collection $S_2$. It is contemplated that collection $S_2$ of the POIs within the searching scope can be determined in other suitable ways through more or less steps. For a live-based interface, after getting the coordinates of POIs which fall into the searching scope, the corresponding tags of the POIs in collection $S_2$ can be displayed on the live view, for example according to the principle of pinhole imaging. For a map-based interface, the POIs in collection $S_2$ can be provided to a map-based application for the LBS (which may run at the user device or a web server), and the map-based application can load a map according to the received information of POIs, and send back the resulted map data after calculation to the map-based interface or module for reloading the map and the corresponding POIs' information such as positions and details.

In the method described in connection with Fig.1, the two-way control mode (or the master-slave mode) is introduced to realize the interoperability between a live-view mode and a map-view mode, so that a control of the LBS in one of the live-view mode and the map-view mode may cause, at least in part, an adaptive control of the LBS in the other of the live-view mode and the map-view mode. For example, the interoperability between the live-view mode and the map-view mode may be embodied in the facts that a variation of parameters which directly changes the visualization effect of POIs in the live-view mode would indirectly affect the corresponding visualization effect in the map-view mode, and vice versa. In practice, the variation of parameters may be intuitively reflected in a change of the searching scope of POIs and its accompanying changes in visualizations on user interfaces. For example, the change of the searching scope may involve variations of the searching radius and/or one or more following parameters regarding a camera: a current position, a view angle, a pitch angel, an orientation angle, a rotation angle, focal length and the like.

Figs.7(a)-(b) show exemplary user interfaces for illustrating a change of a searching scope in accordance with an embodiment of the present invention. The left part of Fig.7(a) or Fig.7(b) shows an exemplary user interface in a live-view mode, and the right part of Fig.7(a) or Fig.7(b) shows an exemplary user interface in a map-view mode. The user interfaces in the live-view mode and in the map-view mode correspond to one another and affect mutually each other. For example, if an orientation of the camera used in the live-view mode changes, the searching scope would rotate with a corresponding angle, and the specified area displayed in the map-view mode (such as the pie-shaped area displayed on the map view at the right part of Fig.7(a) or Fig.7(b)), which is a projection of the 3D searching scope on the horizontal plane (such as the XOY plane in the reference coordinate system), may rotate with a corresponding angle. Optionally, a rotation may also happen on the map view so that the opening angle of the pie-shaped area keeps facing upward, if it supports the rotation. It will be realized that a change of the pitch angle and/or the rotation angle of the camera would also make influences on the visualization of the pie-shaped area on the map view. On the other hand, if an orientation of the pie-shaped area on the map view, such as a relative angle between a centerline of the pie-shaped area and true north, changes in response to an action and/or indication of the user, the visualization in the live-view mode would be updated for example by adjusting the orientation of the camera adaptively. In another example, if the current position of the camera changes (for instance, when a user moves or adjusts his/her device in which the camera is embedded or built), at least geographic coordinates of the apex of the searching scope would change accordingly, and the apex (denoted as "A" in Figs.7(a)-(b)) of the pie-shaped area on the map view would also be adjusted according to the new coordinates (such as latitude and longitude) of the current position of the camera. Similarly, if the apex of the pie-shaped area on the map view is changed, at least latitude and longitude of the apex of the searching scope would change accordingly, which may cause the visualization in the live-view mode to be updated.

In accordance with exemplary embodiments, a change of the view angle of the camera would also make an adaptive change of the searching scope in the live-view mode as well as the pie-shaped area in the map-view mode. For example, considering that the pie-shape area is the projection of the searching scope on the XOY plane in the reference coordinate system, the opening angle of the pie-shaped area may correspond to the horizontal view angle of the camera. Thus, a change of the view angle of the camera would cause the same change of the opening angle of the pie-shape area. In fact, a variation of the opening angle of the pie-shaped area in the map view would also bring a change to the horizontal view angle of the camera. For example, suppose the new horizontal view angle due to a variation of the opening angle of the pie-shaped area is $\theta$, then the new focal length $f'$ of the camera could be deduced from the following equation:

$$\theta' = 2\arctan\frac{h}{2f'} \qquad (3)$$

Accordingly, the vertical view angle changes to $\delta$ according to the following equation:

$$\delta' = 2\arctan\frac{v}{2f'} \qquad (4)$$

where $h$ and $v$ denote the sizes of the CMOS or CCD in horizontal direction and vertical direction respectively, as shown in Fig.5.

According to exemplary embodiments, a new searching radius indicated by the user would intuitively lead to a new radius of the searching scope and affect the projected pie-shaped area correspondingly. Particularly, a change of the searching radius may have an effect on a zoom level of the map view. In the map-view mode, the zoom level may be related to a ratio of an imaging distance and an actual distance of an imaging object (such as POI) from the camera. For example, the zoom level can be expressed as:

$$zoom\ level \propto f\left(\frac{imaging\ distance}{actual\ distance}\right) \qquad (5)$$

where $f()$ represents a specified function applied to the ratio of the imaging distance and the actual distance, and the mathematical notation oc represents that the zoom level is directly proportional to the function of $f()$. In order to achieve the best visual effect on the map view, a radius of the pie-shaped area under a certain zoom level may be for example greater than a quarter of the width of the map view and less than one half of the width of the map view. In practice, if more than one optional zoom level meets this condition, the maximum of these zoom levels may be selected. It will be appreciated that any other suitable zoom level also may be selected as required. Thus, a change of the searching radius (which defines partially the actual distance corresponding to the radius of the pie-shaped area displayed on the map view) would indirectly affect the zoom level. Even if the zoom level is not changed, the radius of the pie-shaped area, as the projection of the searching scope on the horizontal plane, would also vary when the searching radius changes.

From Figs.7(a)-(b), it can be seen that the number of tags for POIs displayed in Fig.7(b) are greater than that in Fig.7(a) since the searching radius specified for Fig.7(b) is larger than that for Fig.7(a). Thus, a change of the searching radius in a master mode (which may be one of the live-view mode and the map-view mode) may cause the corresponding change in a slave mode (which may be the other of the live-view mode and the map-view mode). Although it is merely illustrated here that there is an effect on the visualizations of digital information due to the change of the searching radius, it would be understood from the previous descriptions that there may be other potential responses to a control (such as changing the searching scope) of the LBS in the live-view mode and/or the map-view mode.

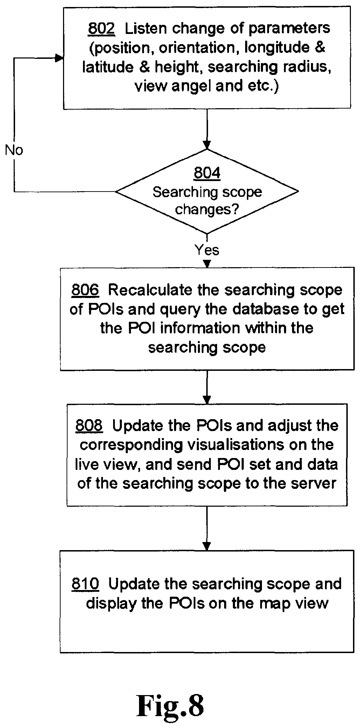

Fig.8 is a flowchart illustrating a process of a two-way control (or a master-slave operating mode) in accordance with an embodiment of the present invention. It should be noted that the master mode and the slave mode mentioned here are relative and may be switchable according to requirements of the user. Actually, adjustments or changes of parameters regarding LBS may be implemented in the two-way control mode, for example, by controlling the LBS in one of the first mode (such as through a live-view interface) and the second mode (such as through a map-view interface), thereby resulting in an adaptive control of the LBS in the other of the first mode and the second mode. According to exemplary embodiments, on one hand, the variation of parameters in the live-view mode would cause the corresponding changes in the map-view mode; on the other hand, variations on the map view would in turn cause changes on the live view. This mutual effect reflects in the circumstance that variations of parameters regarding LBS either from the live-view interface or the map-view interface would result in adaptive changes to both of the live view and the map view. The process shown in Fig.8 may be performed at a user device supporting LBS according to exemplary embodiments. In block 802, the variation of parameters regarding LBS (such as current position, searching radius, view angle, pitch angel, orientation angle, rotation angle and/or the like) can be monitored or listened, for example, by a data acquisition module at the user device or running on a mobile client. For example, the perception of the variation of parameters may be implemented by detecting the parameters' changes through comparing the adjacent data collected from various sensors (such as a GPS receiver, an accelerometer, a compass, a camera and/or the like). If any change is detected in block 804, a new round for POIs may be started for example by a processing module at the user device in block 806 to recalculate the search scope of POIs and then query their information from a database which stores all POIs' positions and description information. In block 808, the POIs within the searching scope may be updated and the corresponding visualizations may be adjusted in the live view of a camera, for example by a live-view interface module. And at the same time or at an earlier or later time as required by the user, information about the newly recalculated searching scope and the queried POIs can be passed to a map application module (such as a web server, a services platform or any other suitable means located internal or external to the user device), for example by the processing module. Then in block 810, the map application module may return the map information about those updated POIs to the map-view interface module which can reload the map and adjust the layout of POIs according to the corresponding parameters.

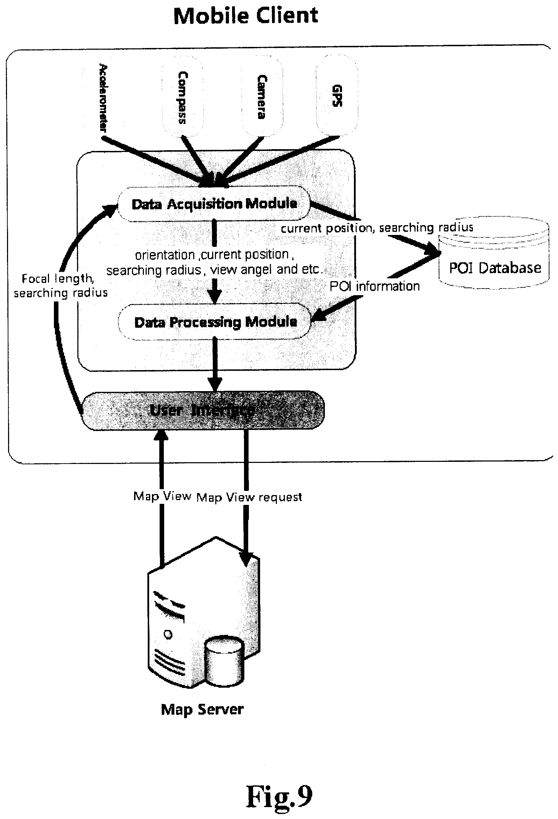

Fig.9 exemplarily illustrates a system architecture in accordance with an embodiment of the present invention. The system architecture presented in Fig.9 comprises a mobile client and a web server. It can be realized that the system in accordance with exemplary embodiments of the present invention may employ other suitable architectures, in which the functions of the web server can be performed by a local module at the mobile client, and/or the respective functions of one or more modules at the mobile client can be performed by other modules external to the mobile client. As shown in Fig.9, some modules embodied in software, hardware or a combination thereof may be comprised at the mobile client side. For example, a data acquisition module, a data processing module, a database module and a user interface module, among others, may be operated at the mobile client. In accordance with an exemplary embodiment, the web server may be designed to respond to some map service related requests from the mobile client. Specifically, these requests may comprise a demonstration of a map, appending digital tags on the map, a rotation of the map and/or the like.

According to exemplary embodiments, the data acquisition module may be responsible for at least one of the following tasks: acquiring sensing data from one or more sensors embedded in the mobile client for example in real time or at regular time intervals; determining context information such as the camera's position and attitude from the raw data sensed by different sensors; detecting a view angle through a focal length of the camera; responding changes of the focal length and the searching radius got from the user interface module; and querying the database module which stores at least position information about POIs, based on the current position of the camera/mobile client, to get the POIs from which the respective distances to the current position of the camera/mobile client are less than the searching radius. The data processing module may be responsible for at least one of the following tasks: determining the searching scope of POIs according to contextual parameters (such as the camera's attitude, current position, view angle, searching radius, and/or the like); acquiring from the database module a set of POIs comprising all the POIs which fall into a sphere centered at the current position and having a radius being equal to the searching radius, and filtering away those POIs which do not fall into the specified searching scope; and communicating with the web server to acquire map data which contain information for all the POIs within the searching scope, for example by sending the acquired POI's coordinates to the web server and receiving the map data returned by the web server. The database module may mainly provide storage and retrieval functions for the POIs. Generally, geographic coordinates (such as longitude, latitude and height) of POIs and their detail descriptions are stored in this database. The user interface module may provide rich human-computer interaction interfaces to visualize the POI information. For example, an AR based live-view interface and a map based interface may be provided as optional operating modes. In particular, any actions or indications applied by the user may be monitored through the user interface module in real time. It may be conceived that the functions of the data acquisition module, the data processing module, the database module and the user interface module may be combined, re-divided or replaced as required, and their respective functions may be performed by more or less modules.

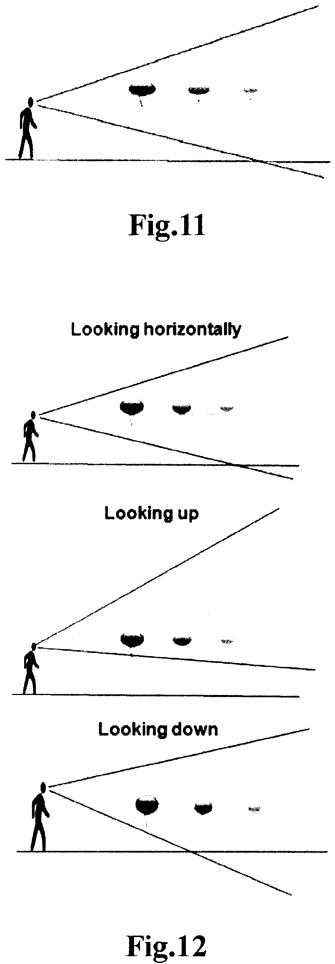

Figs.10(a)-(b) show exemplary user interfaces for illustrating a display of tags in accordance with an embodiment of the present invention. Similar to the user interfaces shown in Figs.7(a)-(b), the user interface shown in Fig.10(a) or Fig.10(b) may comprise two parts: a live-view interface (as the left part of Fig.10(a) or Fig.10(b)) and a map-view interface (as the right part of Fig.10(a) or Fig.10(b)). Data can be shared between the two parts in the proposed solution. For example, digital tags about a same object (such as POI) may be attached on both live and map views with same color and/or numerical symbols. The solution proposed according to exemplary embodiments can avoid an accumulation of tags (which indicate or represent the related information of POIs) by distributing information regarding POIs in a perspective and hierarchical way. For example, the tags on the live view may have respective sizes and opaque densities based at least in part on the actual distances between one or more POIs indicated by the tags and an imaging device (such as a camera at a user device). As illustrated in Fig.10(a) or Fig.10(b), digital tags for POIs are displayed on a screen for the live-view interface according to relative position relationships (such as distance, angle and/or the like) between the POIs and the camera's current location. It is noted that the user's current location/position, the user device's current location/position and the camera's current location/position mentioned in the context may be regarded as the same location/position. Figs.10(a)-(b) reflect the implementation of the augmented 3D perspective effect in various aspects. For example, since the size and the opaque density of each tag representing a POI on a user interface may be determined by a distance between each POI and the user's current location, the closer the distance is, the bigger and more opaque of the tag presents. In addition, the further the POI is, the greater the magnitude of the tag swings on the live view when the view angle changes. Some augmented 3D perspective effects will be illustrated in combination with Figs.11-12.

Fig.11 exemplarily illustrates the three-dimensional perspective effect in accordance with an embodiment of the present invention. A principle of "everything looks small in the distance and big on the contrary" is illustrated in Fig.11. According to this principle, all POIs in collection $S_2$ (which comprises those POIs within the searching scope specified by a user) are ranked according to their respective actual distances from the user's current location. A so-called distance factor can be deduced for each POI by determining its actual distance from the user's current location and calculating multiples of the actual distance to a reference distance. The reference distance may be predefined or selected as required. For example, the maximum among the actual distances of all POIs within the searching scope may be selected as the reference distance. Then, the size and the opaque density of each tag may be chosen to be inversely proportional to the distance factor, as shown in Fig.11, and the tags of all POIs within the searching scope can be displayed on the live view according to their respective sizes and opaque densities.

Fig.12 exemplarily illustrates an effect of rotating a device up and down in accordance with an embodiment of the present invention. As shown in Fig.12, when the device such as a user equipment or a mobile phone is rotated up and down around the x-axis in the body coordinate system, the vertical moving range of the imaging point of a POI (at which point a tag for this POI is approximately located) may be decided by the POI's distance factor mentioned above. For example, the new vertical coordinate (such as the projection coordinate in the direction of z-axis when the device is rotated up and down around the x-axis) of the tag for this POI can be recalculated according to the formula:

$$newVerticalCoor = originalVerticalCoor - roll\ angle * distance\ factor \qquad (6)$$

where "newVerticalCoor" denotes the updated vertical coordinate of the tag, "originalVerticalCoor" denotes the original vertical coordinate of the tag, "roll angle" represents a change of the pitch angle, and "distance factor" is the distance factor deduced for this POI.

On the other hand, a large number of tags (or icons) would be accumulated if multiple POIs are located in the same orientation from the user's perspective. Therefore, in order to avoid this problem, a novel mechanism is proposed herein. In accordance with an exemplary embodiment, the tags on the live view may be displayed in batches, by ranking the tags based at least in part on the actual distances between one or more POIs indicated by the tags and the imaging device. For example, the tags can be ranked in ascending (or descending) order based on respective distances between the one or more POIs and the user's current location, and then the tags are displayed in batches through the live-view interface. For example, tags for the POIs closer to the user may be arranged in the batch displayed earlier. In an exemplary embodiment, corresponding information frames (such as information frames displayed on the top of the live view in Figs.7(a)-(b) and Figs.10(a)-(b)) may be displayed on the live view for describing the tags. In this case, the information frames are also displayed in batches corresponding to the tags, as illustrated in Figs.10(a)-(b). The number of tags (or information frames) within a batch may be decided for example according to the screen size and/or the tag (or information frame) size. The user can control the batches of the displayed tags and the corresponding information frames by providing an indication to the LBS application. For example, the batches of the tags and/or information frames may be switched in response to an indication from the user. In particular, the tags and the corresponding information frames can be switched over in batches if an action of screen swiping or button press is detected. As such, the newly updated tags can be displayed on the screen with their corresponding description information in the information frames.

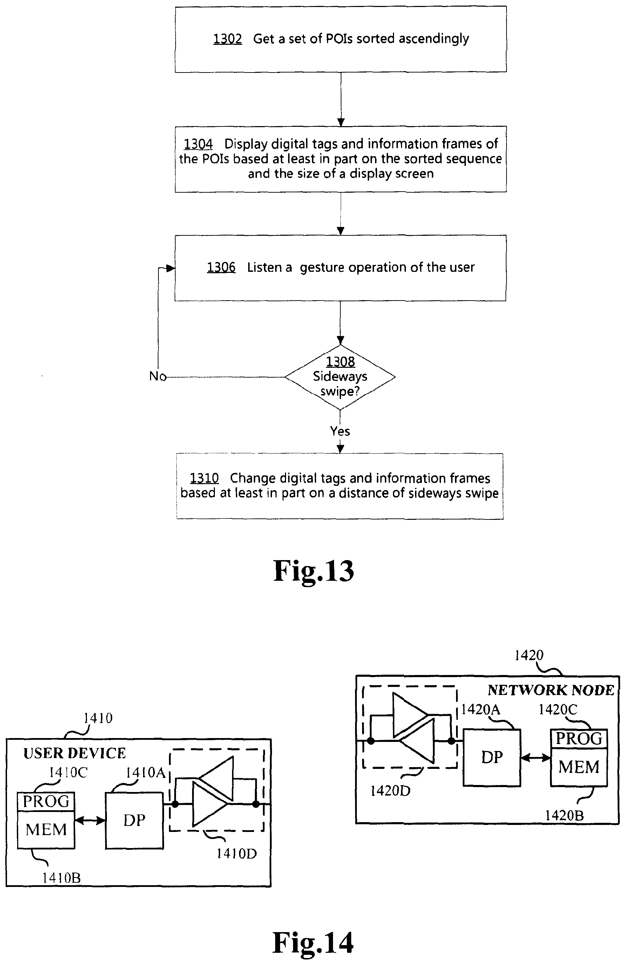

Fig.13 is a flowchart illustrating a process of distributing POI's information in a perspective and hierarchical way to avoid an accumulation of tags, in accordance with an embodiment of the present invention. As shown in Fig.13, a set of POIs (such as POIs in collection $S_2$) which are sorted ascendingly according to their actual distance from the user's current location may be got in block 1302. It is contemplated that the set of POIs also may be sorted in other order (such as in descending order). The corresponding digital tags and information frames of POIs can be displayed in block 1304, for example based at least in part on the sorted sequence and the size of a display screen. In block 1306, an indication of the batch for those POIs to be displayed, such as a gesture operation, a button operation and/or a key operation from the user may be listened or monitored. If the indication of the batch (such as sideways swipe, key control or button press) from the user is detected in block 1308, then the digital tags and the corresponding information frames may be changed in block 1310, for example, based at least in part on a distance of the sideways swipe or a selection of arrow keys.

The various blocks shown in Fig.1, Fig.8 and Fig.13 may be viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

Many advantages can be achieved by using the solution proposed by the present invention. For example, the proposed solution provides a novel human-computer interaction approach for mobile LBS applications, with which a map-view mode and a live-view mode can be operated in or integrated as a unified interface comprising a live-view interface and a map-view interface. In particular, visualizations on the live-view interface and the map-view interface can be synchronized by sharing digital information and contextual data for the LBS applications. Considering that a two-control mode (or a master-slave mode) is designed to realize the interoperability between the live-view interface and the map-view interface in accordance with exemplary embodiments, variations of the searching scope which directly changes an visualization effect of POIs in the live-view mode may directly or indirectly affect the corresponding visualization effect of POIs in the map-view mode, and vice versa. In addition, a perspective and hierarchical layout scheme is also put forward to distribute digital tags for the live-view interface. Specifically, in order to avoid the accumulation of digital information of POIs in a narrow area, the digital information of POIs may be presented through digital tags (or icons) and corresponding description information frames. In an exemplary embodiment, a gesture operation of sideways swipe or a selection operation of arrow keys may be designed to switch these tags and/or frames. Moreover, an enhanced 3D perspective display approach is also proposed. Since projection coordinates in the field of a live view could be obtained during a procedure of coordinate systems transformation, the digital tags for POIs may be placed to different depths of view according to the respective actual distances of the POIs from a user. In view of the principle of "everything looks small in the distance and big on the contrary", a digital tag in distance looks blurrier and smaller. In order to acquire a vivid 3D perspective, the swing amplitude of a digital tag's vertical coordinate (as illustrated in combination with Fig.12) may be proportional to the actual distance between the user and an object represented by the digital tag.

Fig.14 is a simplified block diagram of various apparatuses which are suitable for use in practicing exemplary embodiments of the present invention. In Fig.14, a user device 1410 (such as mobile phone, wireless terminal, portable device, PDA, multimedia tablet, desktop computer, laptop computer and etc.) may be adapted for communicating with a network node 1420 (such as a server, an AP, a BS, a control center, a service platform and etc.). In an exemplary embodiment, the user device 1410 may comprise at least one processor (such as a data processor (DP) 1410A shown in Fig.14), and at least one memory (such as a memory (MEM) 1410B shown in Fig.14) comprising computer program code (such as a program (PROG) 1410C shown in Fig.14). The at least one memory and the computer program code may be configured to, with the at least one processor, cause the user device 1410 to perform operations and/or functions described in combination with Figs. 1-13. In an exemplary embodiment, the user device 1410 may optionally comprise a suitable transceiver 1410D for communicating with an apparatus such as another device, a network node (such as the network node 1420) and so on. The network node 1420 may comprise at least one processor (such as a data processor (DP) 1420A shown in Fig.14), and at least one memory (such as a memory (MEM) 1420B shown in Fig.14) comprising computer program code (such as a program (PROG) 1420C shown in Fig.14). The at least one memory and the computer program code may be configured to, with the at least one processor, cause the network node 1420 to perform operations and/or functions described in combination with Figs. 1-13. In an exemplary embodiment, the network node 1420 may optionally comprise a suitable transceiver 1420D for communicating with an apparatus such as another network node, a device (such as the user device 1410) or other network entity (not shown in Fig.14). For example, at least one of the transceivers 1410D, 1420D may be an integrated component for transmitting and/or receiving signals and messages. Alternatively, at least one of the transceivers 1410D, 1420D may comprise separate components to support transmitting and receiving signals/messages, respectively. The respective DPs 1410A and 1420A may be used for processing these signals and messages.

Alternatively or additionally, the user device 1410 and the network node 1420 may comprise various means and/or components for implementing functions of the foregoing method steps described with respect to Figs.1-13. According to exemplary embodiments, an apparatus (such as the user device 1410, or the network node 1420 communicating with a user device to provide a LBS) may comprise: obtaining means for obtaining context information for a LBS, in response to a request for the LBS from a user; and presenting means for presenting, based at least in part on the context information, the LBS through a user interface in at least one of a first mode and a second mode for the LBS, wherein a control of the LBS in one of the first mode and the second mode causes, at least in part, an adaptive control of the LBS in the other of the first mode and the second mode. Alternatively, the above mentioned obtaining means and presenting means may be implemented at either the user device 1410 or the network node 1420, or at both of them in a distributed manner. In an exemplary embodiment, a solution providing for the user device 1410 and the network node 1420 may comprise facilitating access to at least one interface configured to allow access to at least one service, and the at least one service may be configured to at least perform functions of the foregoing method steps as described with respect to Figs.1-13.

At least one of the PROGs 1410C and 1420C is assumed to comprise program instructions that, when executed by the associated DP, enable an apparatus to operate in accordance with the exemplary embodiments, as discussed above. That is, the exemplary embodiments of the present invention may be implemented at least in part by computer software executable by the DP 1410A of the user device 1410 and by the DP 1420A of the network node 1420, or by hardware, or by a combination of software and hardware.

The MEMs 1410B and 1420B may be of any type suitable to the local technical environment and may be implemented using any suitable data storage technology, such as semiconductor based memory devices, flash memory, magnetic memory devices and systems, optical memory devices and systems, fixed memory and removable memory. The DPs 1410A and 1420A may be of any type suitable to the local technical environment, and may comprise one or more of general purpose computers, special purpose computers, microprocessors, digital signal processors (DSPs) and processors based on multi-core processor architectures, as non-limiting examples.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It will be appreciated that at least some aspects of the exemplary embodiments of the inventions may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory (RAM), and etc. As will be realized by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like.

Although specific embodiments of the invention have been disclosed, those having ordinary skill in the art will understand that changes can be made to the specific embodiments without departing from the spirit and scope of the invention. The scope of the invention is not to be restricted therefore to the specific embodiments, and it is intended that the appended claims cover any and all such applications, modifications, and embodiments within the scope of the present invention.

**Claims**

1. A method comprising:

    obtaining context information for a location based service, in response to a request for the location based service from a user; and
    initiating, based at least in part on the context information, a presentation of the location based service through a user interface in at least one of a first mode and a second mode for the location based service,
    wherein a control of the location based service in one of the first mode and the second mode causes, at least in part, an adaptive control of the location based service in other of the first mode and the second mode,
    wherein a change of a searching scope, determined by at least a viewing angle of a camera, for one or more points of interest in one of the first mode and the second mode causes, at least in part, an adaptive change in visualizations in other of the first mode and the second mode, and wherein the change of the searching scope involves variations of the searching radius of the searching scope and/or one or more parameters regarding the camera.

2. The method according to claim 1, wherein said obtaining the context information for the location based service comprises:

acquiring sensing data from one or more sensors, input data from the user, or a combination thereof; and extracting the context information by analyzing the acquired data.

3. The method according to claim 1, wherein the context information comprises: one or more imaging parameters, one or more indications for the location based service from the user, or a combination thereof.

4. The method according to the claims 1, wherein said presenting the location based service comprises:

determining location based digital information based at least in part on the context information; and visualizing the location based digital information through the user interface in the at least one of the first mode and the second mode.

5. The method according to claim 4, wherein the location based digital information indicates one or more points of interest of the user by respective tags, and wherein the one or more points of interest are within a searching scope specified by the user.

6. The method according to claim 5, wherein the first mode comprises a live mode and the second mode comprises a map mode, and wherein said visualizing the location based digital information comprises at least one of:

displaying the tags on a live view presented in the first mode according to corresponding imaging positions of the one or more points of interest, based at least in part on actual distances between the one or more points of interest and an imaging device for the live view; and
displaying the tags on a map view presented in the second mode according to corresponding geographic positions of the one or more points of interest.

7. The method according to claim 6, wherein the tags on the live view have respective sizes and opaque densities based at least in part on the actual distances between the one or more points of interest and the imaging device.

8. The method according to claim 6, wherein the tags on the live view are displayed in batches, by ranking the tags based at least in part on the actual distances between the one or more points of interest and the imaging device.

9. The method according to any of the preceding claims, wherein said one or more parameters regarding the camera comprise a camera zoom level and/or focal length.

10. The method according to any of the preceding claims, wherein the first mode comprises a live view mode and the second mode comprises a map view mode, and the first and the second modes are displayed simultaneously or alternately.

11. The method according to claim 10, wherein the change of the searching scope in the live view mode involves a change of a zoom level in the map view mode.

12. The method according to any of the preceding claims, wherein the context information comprises the viewing angle of the camera.

13. The method according to any of the preceding claims, wherein the context information further comprises a camera zoom level and/or focal length, and wherein the change of the searching scope is further determined at least by the camera zoom level and/or the focal length.

14. An apparatus, comprising means for performing a method according to any of the preceding claims.

15. A computer program product comprising a computer-readable medium bearing computer program code embodied therein for use with a computer, wherein the computer program code causes the computer to carry out a method according to any of claims 1 to 13.

16. A system for performing a method according to any of claims 1 to 13.

**Patentansprüche**

1. Verfahren umfassend:

   Erhalten von Kontextinformationen für einen ortsbezogenen Dienst als Reaktion auf eine Anforderung des ortsbezogenen Dienstes von einem Benutzer; und

   Initiieren, zumindest teilweise basierend auf den Kontextinformationen, einer Präsentation des ortsbezogenen Dienstes durch eine Benutzerschnittstelle in mindestens einem von einem ersten Modus und einem zweiten Modus für den ortsbezogenen Dienst,

   wobei eine Steuerung des ortsbezogenen Dienstes in einem des ersten Modus und des zweiten Modus zumindest teilweise eine adaptive Steuerung des ortsbezogenen Dienstes in dem anderen des ersten Modus und des zweiten Modus bewirkt,

   wobei eine Änderung eines Suchbereichs, der durch mindestens einen Blickwinkel einer Kamera bestimmt wird, für ein oder mehrere Sonderziele (Points of Interest) in einem des ersten Modus und des zweiten Modus zumindest teilweise eine adaptive Änderung der Visualisierungen in dem anderen des ersten Modus und des zweiten Modus bewirkt, und wobei die Änderung des Suchbereichs Variationen des Suchradius des Suchbereichs und/oder eines oder mehrerer Parameter bezüglich der Kamera beinhaltet.

2. Verfahren nach Anspruch 1, wobei das Erhalten der Kontextinformationen für den ortsbezogenen Dienst umfasst:

   Erfassen von Messdaten von einem oder mehreren Sensoren, Eingabedaten vom Benutzer oder einer Kombination davon; und

   Extrahieren der Kontextinformationen durch Analyse der erfassten Daten.

3. Verfahren nach Anspruch 1, wobei die Kontextinformationen umfassen: einen oder mehrere Bildgebungsparameter, eine oder mehrere Angaben für den ortsbezogenen Dienst vom Benutzer oder eine Kombination davon.

4. Verfahren nach Anspruch 1, wobei das Präsentieren des ortsbezogenen Dienstes umfasst:

   Bestimmen von ortsbezogenen digitalen Informationen basierend zumindest teilweise auf den Kontextinformationen; und

   Visualisieren der ortsbezogenen digitalen Informationen über die Benutzerschnittstelle in mindestens einem von dem ersten Modus und dem zweiten Modus.

5. Verfahren nach Anspruch 4, wobei die ortsbezogenen digitalen Informationen ein oder mehrere Sonderziele des Benutzers durch entsprechende Tags anzeigen, und wobei das eine oder die mehreren Sonderziele innerhalb eines vom Benutzer spezifizierten Suchbereichs liegen.

6. Verfahren nach Anspruch 5, wobei der erste Modus einen Live-Modus und der zweite Modus einen Kartenmodus umfasst, und wobei das Visualisieren der ortsbezogenen digitalen Informationen mindestens eines von Folgendem umfasst:

   Anzeigen der Tags auf einer Live-Ansicht, die in dem ersten Modus dargestellt wird, entsprechend den entsprechenden Bildgebungspositionen des einen oder der mehreren Sonderziele zumindest teilweise basierend auf den tatsächlichen Abständen zwischen dem einen oder den mehreren Sonderzielen und einer Bildgebungsvorrichtung für die Live-Ansicht; und

   Anzeigen der Tags auf einer Kartenansicht, die im zweiten Modus dargestellt wird, entsprechend den entsprechenden geografischen Positionen des einen oder der mehreren Sonderziele.

7. Verfahren nach Anspruch 6, wobei die Tags auf der Live-Ansicht entsprechende Größen und Deckungsdichten aufweisen, die zumindest teilweise auf den tatsächlichen Abständen zwischen dem einen oder den mehreren Sonderzielen und der Bildgebungsvorrichtung basieren.

8. Verfahren nach Anspruch 6, wobei die Tags auf der Live-Ansicht in Chargen angezeigt werden, indem die Tags zumindest teilweise basierend auf den tatsächlichen Abständen zwischen dem einen oder den mehreren Sonderzielen und der Bildgebungsvorrichtung geordnet werden.

9. Verfahren nach einem der vorstehenden Ansprüche, wobei der eine oder die mehreren Parameter bezüglich der

**EP 3 004 803 B1**

Kamera eine Kamerazoomstufe und/oder Brennweite umfassen.

**10.** Verfahren nach einem der vorstehenden Ansprüche, wobei der erste Modus einen Live-Ansichtsmodus und der zweite Modus einen Kartenansichtsmodus umfasst, und der erste und der zweite Modus gleichzeitig oder abwechselnd angezeigt werden.

**11.** Verfahren nach Anspruch 10, wobei die Änderung des Suchbereichs im Live-Ansichtsmodus eine Änderung einer Zoomstufe im Kartenansichtsmodus beinhaltet.

**12.** Verfahren nach einem der vorstehenden Ansprüche, wobei die Kontextinformationen den Blickwinkel der Kamera umfassen.

**13.** Verfahren nach einem der vorstehenden Ansprüche, wobei die Kontextinformationen ferner eine Kamerazoomstufe und/oder Brennweite umfassen, und wobei die Änderung des Suchbereichs ferner mindestens durch die Kamerazoomstufe und/oder die Brennweite bestimmt wird.

**14.** Vorrichtung , umfassend Mittel zum Durchführen eines Verfahrens nach einem der vorstehenden Ansprüche.

**15.** Computerprogrammprodukt, das ein computerlesbares Medium mit darin verkörpertem Computerprogrammcode zur Verwendung mit einem Computer umfasst, wobei der Computerprogrammcode den Computer veranlasst, ein Verfahren nach einem der Ansprüche 1 bis 13 auszuführen.

**16.** System zum Durchführen eines Verfahrens nach einem der Ansprüche 1 bis 13.

**Revendications**

**1.** Procédé qui comprend :

l'obtention d'une information de contexte pour un service basé sur la localisation, en réponse à une requête pour le service basé sur la localisation depuis un utilisateur ; et
le lancement, sur la base au moins partiellement de l'information de contexte, d'une présentation du service basé sur la localisation via une interface utilisateur dans au moins l'un parmi un premier mode et un second mode pour le service basé sur la localisation,
dans lequel une commande du service basé sur la localisation dans l'un parmi le premier mode et le second mode entraîne, au moins partiellement, une commande adaptative du service basé sur la localisation dans l'autre parmi le premier mode et le second mode,
dans lequel un changement d'une étendue de recherche, déterminé par au moins un angle visuel d'une caméra, pour un ou plusieurs points d'intérêt dans l'un parmi le premier mode et le second mode entraîne, au moins partiellement, un changement adaptatif dans des visualisations dans l'autre parmi le premier mode et le second mode, et dans lequel le changement de l'étendue de recherche implique des variations du rayon de recherche de l'étendue de recherche et/ou d'un ou plusieurs paramètres concernant la caméra.

**2.** Procédé selon la revendication 1, dans lequel ladite obtention de l'information de contexte pour le service basé sur la localisation comprend :

l'acquisition de données de détection depuis un ou plusieurs capteurs, de données d'entrée depuis un utilisateur, ou d'une combinaison de celles-ci ; et
l'extraction de l'information de contexte en analysant les données acquises.

**3.** Procédé selon la revendication 1, dans lequel l'information de contexte comprend :
un ou plusieurs paramètres d'imagerie, une ou plusieurs indications pour le service basé sur la localisation depuis un utilisateur, ou une combinaison de celles-ci.

**4.** Procédé selon la revendication 1, dans lequel ladite présentation du service basé sur la localisation comprend :

la détermination d'une information numérique basée sur la localisation basée au moins partiellement sur l'information de contexte ; et

la visualisation de l'information numérique basée sur la localisation via l'interface utilisateur dans le au moins un parmi le premier mode et le second mode.

5. Procédé selon la revendication 4, dans lequel l'information numérique basée sur la localisation indique un ou plusieurs points d'intérêt de l'utilisateur par des étiquettes respectives, et dans lequel les un ou plusieurs points d'intérêt se trouvent à l'intérieur d'une étendue de recherche spécifiée par l'utilisateur.

6. Procédé selon la revendication 5, dans lequel le premier mode comprend un mode direct et le second mode comprend un mode carte, et dans lequel ladite visualisation de l'information numérique basée sur la localisation comprend au moins l'un parmi :

un affichage des étiquettes sur une vue en direct présentée dans le premier mode en fonction de positions d'imagerie correspondantes des un ou plusieurs points d'intérêt, sur la base au moins partiellement de distances réelles entre les un ou plusieurs points d'intérêt et un dispositif d'imagerie pour la vue en direct ; et
un affichage des étiquettes sur une vue de carte présentée dans le second mode en fonction de positions géographiques correspondantes des un ou plusieurs points d'intérêt.

7. Procédé selon la revendication 6, dans lequel les étiquettes sur la vue en direct présentent des tailles et des densités opaques respectives sur la base au moins partiellement des distances réelles entre les un ou plusieurs points d'intérêt et le dispositif d'imagerie.

8. Procédé selon la revendication 6, dans lequel les étiquettes sur la vue en direct sont affichées par lots, en classant les étiquettes sur la base au moins partiellement des distances réelles entre les un ou plusieurs points d'intérêt et le dispositif d'imagerie.

9. Procédé selon l'une quelconque des revendications précédentes, dans lequel lesdits un ou plusieurs paramètres concernant la caméra comprennent un niveau de grossissement et/ou une longueur focale de caméra.

10. Procédé selon l'une quelconque des revendications précédentes, dans lequel le premier mode comprend un mode de vue en direct et le second mode comprend un mode de vue de carte, et le premier et le second modes sont affichés simultanément ou alternativement.

11. Procédé selon la revendication 10, dans lequel le changement de l'étendue de recherche dans le mode de vue en direct implique un changement d'un niveau de grossissement dans le mode de vue de carte.

12. Procédé selon l'une quelconque des revendications précédentes, dans lequel l'information de contexte comprend l'angle visuel de la caméra.

13. Procédé selon l'une quelconque des revendications précédentes, dans lequel l'information de contexte comprend en outre un niveau de grossissement et/ou une longueur focale de caméra, et dans lequel le changement de l'étendue de recherche est en outre déterminé au moins par le niveau de grossissement et/ou la longueur focale de caméra.

14. Appareil, qui comprend des moyens pour réaliser un procédé selon l'une quelconque des revendications précédentes.

15. Produit de programme informatique qui comprend un support lisible par ordinateur qui porte un code de programme informatique incorporé dans celui-ci pour être utilisé avec un ordinateur, dans lequel le code de programme informatique amène l'ordinateur à exécuter le procédé selon l'une quelconque des revendications 1 à 13.

16. Système pour réaliser un procédé selon l'une quelconque des revendications 1 à 13.

Obtain context information for a LBS, in
response to a request for the LBS from a user

102

Present, based at least in part on the context
information, the LBS through a user interface in
at least one of a first mode and a second mode for
the LBS

104

# Fig.1

Y

N

X

O

Z

S

# Fig.2

**Fig.3**

**Fig.4**

**Fig.5**

Searching Scope

searching radius

**Fig.6**

Fig.7（a）

Fig.7 (b)

**802** Listen change of parameters (position, orientation, longitude & latitude & height, searching radius, view angel and etc.)

**804** Searching scope changes?

No

Yes

**806** Recalculate the searching scope of POIs and query the database to get the POI information within the searching scope

**808** Update the POIs and adjust the corresponding visualisations on the live view, and send POI set and data of the searching scope to the server

**810** Update the searching scope and display the POIs on the map view

**Fig.8**

# Mobile Client

Fig.9

Fig.10 ( a )

Fig.10 (b)

**Fig.11**

Looking horizontally

Looking up

Looking down

**Fig.12**

```
┌─────────────────────────────────────────────┐
│ 1302  Get a set of POIs sorted ascendingly   │
└─────────────────────────────────────────────┘
                      │
                      ▼
┌─────────────────────────────────────────────┐
│ 1304  Display digital tags and information    │
│ frames of the POIs based at least in part on  │
│ the sorted sequence and the size of a display │
│ screen                                        │
└─────────────────────────────────────────────┘
                      │
                      ▼
┌─────────────────────────────────────────────┐
│ 1306  Listen a  gesture operation of the user │
└─────────────────────────────────────────────┘
                      │
                      ▼
              ◇ 1308 Sideways swipe? ◇ ── No
                      │
                     Yes
                      ▼
┌─────────────────────────────────────────────┐
│ 1310  Change digital tags and information     │
│ frames based at least in part on a distance   │
│ of sideways swipe                             │
└─────────────────────────────────────────────┘
```

**Fig.13**

**Fig.14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011283223 A1
- US 2011221771 A1